# EUROPÄISCHE PATENTSCHRIFT

(11) **EP 2 829 519 B1**
(45) Veröffentlichungstag und Bekanntmachung des Hinweises auf die Patenterteilung: **11.01.2017**
(21) Anmeldenummer: 14178324.1
(22) Anmeldetag: 24.07.2014
(51) Int. Cl.: C02F 1/32

(54) **VORRICHTUNG ZUR WASSERDESINFEKTION DURCH BEHANDLUNG MIT ULTRAVIOLETTER STRAHLUNG**
APPARATUS FOR THE DISINFECTION OF WATER WITH ULTRAVIOLET RADIATION
DISPOSITIF DE DÉSINFECTION DE L'EAU PAR RAYONNEMENT ULTRAVIOLET

(30) Priorität: 26.07.2013 DE 202013006766 U
(43) Veröffentlichungstag der Anmeldung: 28.01.2015
(73) Patentinhaber: biotec Umwelt-Analytik-Beratung-Service GmbH, 33332 Gütersloh (DE)
(72) Erfinder: Bermpohl, Andreas, 33334 Gütersloh (DE)
(74) Vertreter: Grund, Martin

(56) Entgegenhaltungen:
- DE-A1- 4 319 531
- DE-A1- 10 201 037
- DE-A1-102004 051 621
- DE-U1-202007 000 031

## Beschreibung

### Technisches Umfeld

Die Erfindung betrifft eine Vorrichtung zur Wasserdesinfektion bzw. Entkeimung von Wasser durch Behandlung mit ultravioletter (UV-)Strahlung, umfassend wenigstens einen Strahler mit einem Wellenlängenbereich im UVC-Bereich, der unmittelbar in der Flüssigkeit eines zu entkeimenden Wasservorratsbehälter angeordnet ist und mit einem für UVC-Licht durchlässigen Quarzglasgehäuse ausgestattet ist.

### Stand der Technik

Wasserdesinfektion durch UV-Strahlung ist gängige Praxis. So ist seit 1959 die Desinfektion von Trinkwasser durch Behandlung mit ultravioletter UV-Strahlung gesetzlich zugelassen. UV-Desinfektionsanlagen werden in der Trinkwasseraufbereitung mit großem und nachhaltigem Erfolg eingesetzt. Neben der klassischen Wasseraufbereitung für zahlreiche Anwendungen (Trinkwassergewinnung, Wasser für Lebensmittelbetriebe, Wasser für industrielle Anwendungen allgemein) finden leistungsstarke und heißwassergeeignete UV-Anlagen auch wirkungsvollen Einsatz zur Bewahrung einer einwandfreien mikrobiologischen Wasserqualität in den Trinkwasseranlagen von Gebäuden. Der Wirkungsmechanismus der Desinfektion durch UV-Strahlung beruht auf einer photochemischen Veränderung von Teilen der DNA bei Bestrahlung mit Wellenlängen im UVC-Bereich um 260 Nanometer. Diese Strahlung wird wirtschaftlich mit Quecksilberdampf-Niederdruckstrahlen erzeugt. Die photochemische Veränderung ist die Dimerisierung benachbarter Thyminbasen an der DNA. Die Mikroorganismen verlieren sofort ihre Vermehrungsfähigkeit.

Gemäß dem Stand der Technik sind hierzu Vorrichtungen zur Wasserdesinfektion bzw. Entkeimung von Wasser bekannt, bei denen UV-Strahler in ein Wasservorratsbecken eingehängt werden. Bei dieser Art der Strahlungsbehandlung des zu entkeimenden Wassers gibt es dahingehend Nachteile, dass insbesondere Schattenbildungen in dem Vorratsbehälter gegeben sind, so dass eine effektive Entkeimung nicht gegeben ist.

Eine andere Lösung stellt die Anordnung eines Bypasses zu dem Wasservorratsbehälter dar, in dem der oder die UV-Strahler angeordnet sind. Bei dieser Art der Vorrichtung wird das Wasser aus dem Vorratsbehälter in einem Bypass umgewälzt, in dem der Reaktorbereich angeordnet ist. Nachteilig bei dieser Ausführungsform ist die aufwendige anlagentechnische Anordnung des Bypasses, wobei eine Abstimmung insbesondere der Intensität bei der Bypass-Anordnung oft nicht gegeben ist.

Das deutsche Gebrauchsmuster Nr. 20 2007 000 031.6 beschreibt einen versenkbaren Entkeimungsreaktor aus Stahl, der mit einer reflektierenden Innenoberfläche und einer integrierten Pumpe ausgestattet ist. Die Pumpe pumpt das zu entkeimende Wasser in linearer Weise in die Reaktorkammer. Eine stählerne Reaktorkammer mit einer reflektierenden Innenoberfläche ist imstande, das Wartungspersonal effektiv vor unbeabsichtigter UV-Exposition zu schützen.

### Aufgabe

Der Erfindung stellt sich das Problem, eine Vorrichtung zur Wasserdesinfektion bzw. Entkeimung von Wasser durch Behandlung mit ultravioletter UV-Strahlung dahingehend weiter zu bilden, dass sie einerseits die Nachteile der Bestrahlungsanordnung in einem Wasservorratsbehälter überwindet, andererseits aber auch die Vorteile einer klassischen Bestrahlungsanordnung bewahrt, insbesondere die Desinfektion der Innenwände des Vorratsbehälters selbst.

### Lösung

Erfindungsgemäß wird dieses Problem durch den Hauptanspruch gelöst, vorteilhafte Weiterbildungen ergeben sich aus den Unteransprüchen.

Die mit der Erfindung erreichten Vorteile bestehen darin, dass durch einfaches Einsetzen eines versenkbaren Entkeimungsreaktors in einen Wasservorratsbehälter eine Entkeimung vorgenommen werden kann, ohne dass ein größerer Installationsbedarf erforderlich ist. Der Entkeimungsreaktor und die Pumpe bilden eine Einheit und sind hierzu in einem Modul zusammengesetzt, so dass es ohne Anschlussleitungen in jeden beliebigen Wasservorratsbehälter eingebracht werden kann. Der Entkeimungsreaktor ist mit einem für UVC-Strahlung durchlässigen Quarzglasgehäuse ausgestattet, so dass neben der Entkeimung des durchgeführten Wassers auch eine Entkeimung der Innenoberflächen des Wasserbehälters möglich ist.

Dabei ist von besonderem Vorteil, dass der Entkeimungsreaktor ohne aufwendige Vorinstallationen beispielsweise in Umlaufsprühbefeuchtern von Reinraumluft-Anlagen zum Einsatz kommen kann. Weiterhin ist der Entkeimungsreaktor ebenfalls geeignet für die Entkeimung von Trinkwasservorratsbehältern jeder Art.

Der Entkeimungsreaktor ist aus UVC-durchlässigem Quarzglas gefertigt, wobei außerhalb des Wasservorratsbehälters eine Steuereinheit angebracht wird. In dem Entkeimungsreaktor ist ein ozonfrei arbeitender UV-Tauchstzahler in Längsrichtung zentral in der Brennkammer eingebracht. Der Tauchstrahler ist hierbei über Federnuten im Reaktor vibrationsfrei fixiert. Je nach Länge und damit nach Leistung des Tauchstrahlers sind verschiedene Reaktorlängen bei gleich bleibendem Reaktorquerschnitt möglich. Der Tauchstrahler wird über ein in der Steuereinheit angebrachtes elektronisches Vorschaltgerät geschaltet. Die Bestrahlungszeit ist über eine Zeitschaltuhr programmierbar. Steuereinheit und Reaktor sind elektrisch über wasserdichte Kabelleitungen verbunden.

Vor der Reaktorkammer befindet sich eine Wasserpumpe, die in linearer Weise das zu entkeimende Wasser in die Reaktorkammer pumpt. Die Pumpe ist ebenfalls elektrisch mit der Steuereinheit verbunden und über die Steuereinheit ist der Volumenstrom nach Bedarf einzuregulieren. Die Pumpe ist für Wartungs- und Reinigungszwecke totraumfrei ausgelegt und kann separat entnommen werden. Das quaderförmig ausgelegte System ist mit einem Deckel versehen, der über Schnellverschlüsse entfernt werden kann. Damit sind die Pumpe und auch der Strahler leicht zugänglich.

Gemäß einer besonderen vorteilhaften Weiterbildung der Erfindung können beim Durchsatz von größeren Wasservolumina mehrere versenkbare Entkeimungsreaktoren modular kombiniert werden. Bei der Versenkung von mehreren Entkeimungsreaktoren in einen Wasservorratsbehälter können diese dann verteilt, übereinander, nebeneinander oder aber auch hintereinander in dem Wasservorratsbehälter eingesetzt bzw. eingebracht werden, um auf diese Weise eine effiziente Entkeimung zu erzielen. Dabei besteht die Möglichkeit, dass mittels einer Steuereinheit die Regelung und die Versorgung der einzelnen Entkeimungsreaktoren erfolgen kann.

### Beschreibung der Zeichnungen

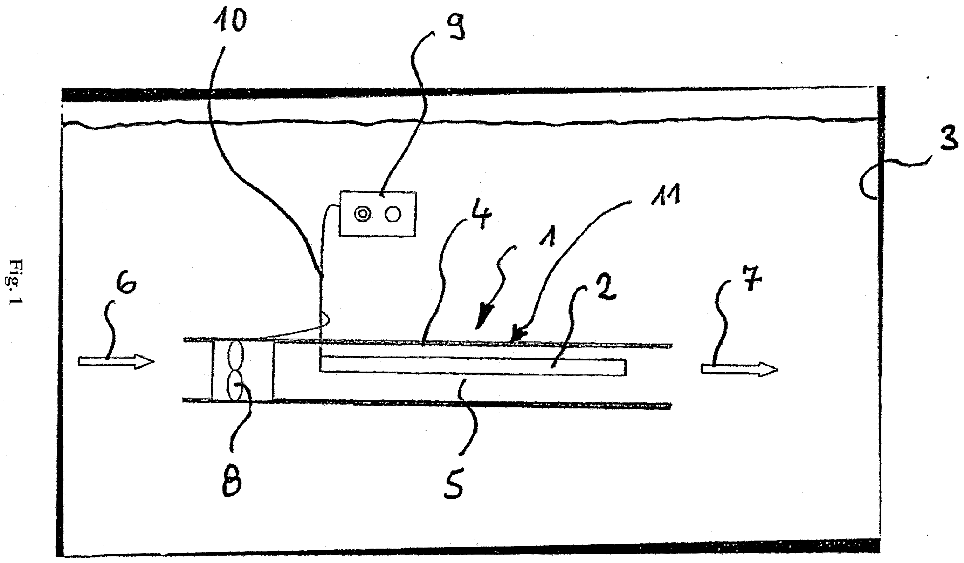

Ein Ausführungsbeispiel der Erfindung ist anhand von Fig. 1 rein schematisch dargestellt.

### Ausführungsbeispiele

Die einzige Figur zeigt in der schematischen Darstellung eine Vorrichtung 1 zur Wasserdesinfektion bzw. Entkeimung von Wasser durch Behandlung mit ultravioletter UV-Strahlung. Die Vorrichtung 1 umfasst dabei wenigstens einen Strahler 2 mit einem Wellenlängenbereich im UVC-Bereich. Die Vorrichtung 1 besteht dabei erfindungsgemäß aus einem in einem Wasservorratsbehälter 3 versenkbaren Entkeimungsreaktor 4, so wie er sich in der Figur darstellt.

Der Entkeimungsreaktor 4 ist dabei aus einer länglichen beidseits geöffneten Reaktorkammer 5 mit einem Systemeinlass 6 und einem Systemauslass 7 gebildet. In der Reaktorkammer 5 ist neben dem UVC-Tauchstrahler 2 eine Pumpe 8 zur Erzeugung eines Volumenstroms gemäß angegebener Pfeilrichtungen in dem Entkeimungsreaktor 4 angeordnet. Wie aus der Figur weiter zu erkennen ist, ist außerhalb des Wasservorratsbehälters 3 eine Steuereinheit 9 vorgesehen. Über diese Steuereinheit 9 werden einerseits die Pumpe 8 sowie der UVC-Tauchstrahler 2 gesteuert und mit der nötigen Energie versorgt. Das Gehäuse des Entkeimungsreaktors 4 besteht im Bereich des UVC-Tauchstrahlers 2 aus UVC-durchlässigem Quarzglas.

Der in Längsrichtung zentral in der Reaktorkammer 5 angeordnete UVC-Tauchstrahler 2 wird mittels nicht näher dargestellter Federnuten im Querschnitt der Reaktorkammer 5 vibrationsfrei gehalten bzw. fixiert. Der UVC-Tauchstrahler 2 ist dabei mittels einer dicht schließenden Quarzglashülle geschützt.

In Weiterbildung der Erfindung sind wie bereits schon beschrieben der UVC-Tauchstrahler 2 und die Pumpe 8 über eine wasserdichte Kabelleitung 10 mit einer außerhalb des Wasservorratsbehälters 3 angeordneten Steuereinheit 9 verbunden. Dabei ist in vorteilhafter Weise die Reaktorkammer 5 vorzugsweise quaderförmig ausgebildet. Die Deckfläche 11 der Reaktorkammer 5 ist mit wenigstens einem abnehmbaren Deckel versehen, um auf diese Weise einen leichten Zugriff zum UVC-Tauchstrahler 2 bzw. zur Pumpe 8 zu bekommen.

Gemäß einer Weiterbildung der Erfindung, die nicht näher dargestellt ist, können mehrere versenkbare Entkeimungsreaktoren 4 modular kombiniert werden. Es versteht sich von selbst, dass, wenn die Kapazität erhöht werden soll, hier Entkeimungsreaktoren 4 entweder hintereinander geschaltet werden können oder auch nebeneinander in einem Wasservorratsbehälter 3 versenkt werden können, um auf diese Weise die Durchsatzkapazität zu erhöhen.

Bei der Versenkung von mehreren Entkeimungsreaktoren 4 in einen Wasservorratsbehälter 3 können diese dann verteilt, übereinander, nebeneinander oder aber auch hintereinander in dem Wasservorratsbehälter 3 eingesetzt bzw. eingebracht werden, um auf diese Weise eine effiziente Entkeimung zu erzielen. Dabei besteht die Möglichkeit, dass mittels einer Steuereinheit 9 die Regelung und die Versorgung der einzelnen Entkeimungsreaktoren 4 erfolgen kann.

## Patentansprüche

1. Vorrichtung (1) zur Wasserdesinfektion bzw. Entkeimung von Wasser durch Behandlung mit ultravioletter (UV-)Strahlung, umfassend wenigstens einen Strahler (2) mit einem Wellenlängenbereich im UVC-Bereich, wobei die Vorrichtung (1) aus einem in einen Wasservorratsbehälter (3) versenkbaren Entkeimungsreaktor (4) besteht, der aus einer länglichen beidseits geöffneten Reaktorkammer (5) mit einem Systemeinlass (6) und einem Systemauslass (7) gebildet ist, in der neben einem UVC-Tauchstrahler (2) eine Pumpe (8) zur Erzeugung eines Volumenstromes in der Reaktorkammer (5) angeordnet ist, wobei eine Steuereinheit (9) außerhalb des Wasservorratsbehälters (3) vorgesehen ist, **dadurch gekennzeichnet, dass** Gehäuse des Entkeimungsreaktors (4) im Bereich des UVC-Tauchstrahlers (2) aus UVC-durchlässigem Quarzglas besteht.

2. Vorrichtung zur Wasserdesinfektion bzw. Entkeimung von Wasser nach Anspruch 1, **dadurch gekennzeichnet, dass** der UVC-Tauchstrahler (2) in Längsrichtung zentral in der Reaktorkammer (5) angeordnet ist.

3. Vorrichtung zur Wasserdesinfektion bzw. Entkeimung von Wasser nach irgendeinem der Ansprüche 1 oder 2, **dadurch gekennzeichnet, dass** der UVC-Tauchstrahler (2) mittels Federnuten im Querschnitt der Reaktorkammer (5) vibrationsfrei fixiert ist.

4. Vorrichtung zur Wasserdesinfektion bzw. Entkeimung von Wasser nach irgendeinem der Ansprüche 1 bis 3, **dadurch gekennzeichnet, dass** der UVC-Tauchstrahler (2) mittels einer dicht schließenden Quarzglashülle geschützt ist.

5. Vorrichtung zur Wasserdesinfektion bzw. Entkeimung von Wasser nach irgendeinem der Ansprüche 1 bis 4, **dadurch gekennzeichnet, dass** der UVC-Tauchstrahler (2) und die Pumpe (8) über eine wasserdichte Kabelleitung (10) mit einer außerhalb des Wasservorratsbehälters (3) angeordneten Steuereinheit (9) verbunden sind.

6. Vorrichtung zur Wasserdesinfektion bzw. Entkeimung von Wasser nach irgendeinem der Ansprüche 1 bis 5, **dadurch gekennzeichnet, dass** die Reaktorkammer (5) vorzugsweise quaderförmig ausgebildet ist, wobei die Deckfläche (11) mit wenigstens einem abnehmbaren Deckel versehen ist.

7. Vorrichtung zur Wasserdesinfektion bzw. Entkeimung von Wasser nach irgendeinem der Ansprüche 1 bis 6, **dadurch gekennzeichnet, dass** mehrere versenkbare Entkeimungsreaktoren (4) modular kombinierbar sind.

8. Vorrichtung zur Wasserdesinfektion bzw. Entkeimung von Wasser nach Anspruch 7, **dadurch gekennzeichnet, dass** bei der Versenkung von mehreren Entkeimungsreaktoren (4) in einen Wasservorratsbehälter (3) diese verteilt übereinander, nebeneinander oder aber auch hintereinander in dem Wasservorratsbehälter (3) einsetzbar bzw. einbringbar sind, und gemeinsam mittels einer Steuereinheit (9) regelbar sind.

## Claims

1. Apparatus (1) for disinfection of water respectively sterilization of water by treatment with ultraviolet (UV) radiation, comprising at least one radiator (2) having a wavelength range in the UVC range, wherein the apparatus (1) consists of a sterilization reactor (4) immersable in a water storage container (3) which is formed by an elongated reactor chamber (5) open at both sides and a system inlet (6) and a system outlet (7) in which a pump (8) for generation of a volume flow in the reactor chamber (5) is arranged, besides an UVC immersion radiator (2), wherein a control unit (9) is provided outside of the water storage container (3), **characterized in that** the housing of the sterilization reactor (4) is made out of UVC-transparent quartz glass in the region of the UVC immersion radiator (2).

2. Apparatus (1) for disinfection of water respectively sterilization of water according to claim 1, **characterized in that** the UVC immersion radiator (2) is arranged centrally in the reactor chamber (5) in longitudinal direction.

3. Apparatus (1) for disinfection of water respectively sterilization of water according to any of the claims 1 or 2, **characterized in that** the UVC immersion radiator is vibration-free fixed in the cross-section of the reactor chamber (5) by means of tongue-and-groove connections.

4. Apparatus (1) for disinfection of water respectively sterilization of water according to any of the claims 1 to 3, **characterized in that** the UVC immersion radiator (2) is protected by means of a tightly sealing quartz cover.

5. Apparatus (1) for disinfection of water respectively sterilization of water according to any of the claims 1 to 4, **characterized in that** the UVC immersion radiator (2) and the pump (8) are connected with a control unit (9) arranged outside of the water storage container (3) by a water-proof wired connection (10).

6. Apparatus (1) for disinfection of water respectively sterilization of water according to any of the claims 1 to 5, **characterized in that** the reactor chamber (5) is preferably designed rectangular-shaped, wherein the cover surface (11) is provided with at least one removable cover.

7. Apparatus (1) for disinfection of water respectively sterilization of water according to any of the claims 1 to 6, **characterized in that** several immersable sterilization reactors (4) are modularly combinable.

8. Apparatus (1) for disinfection of water respectively sterilization of water according to claim 7, **characterized in that**, when several sterilization reactors (4) are immersed in a water storage container (3), they are insertable respectively introducible distributed in the water storage container (3) on top of each other, next to each other or even one after another and are controllable together by means of a control unit (9).

## Revendications

1. Dispositif (1) de désinfection de l'eau ou de décontamination de l'eau par traitement au rayonnement ultraviolet (UV), comprenant au moins un émetteur de rayonnement (2) avec une plage de longueurs d'ondes dans le domaine des UVC, dans lequel le dispositif (1) est constitué d'un réacteur de décontamination (4) pouvant être immergé dans un récipient de réserve d'eau (3), formé à partir d'une chambre de réacteur (5) oblongue ouverte bilatéralement avec un orifice d'entrée du système (6) et un orifice de sortie du système (7), dans laquelle, en plus d'un émetteur de rayonnement UVC submersible (2), une pompe (8) est disposée pour la production d'un flux volumique dans la chambre de réacteur (5), dans lequel une unité de commande (9) est prévue à l'extérieur du récipient de réserve d'eau (3), **caractérisé en ce que** le logement du réacteur de décontamination (4) est constitué d'un verre de quartz perméable aux UVC dans la zone de l'émetteur de rayonnement UVC submersible (2).

2. Dispositif pour la désinfection de l'eau ou la décontamination de l'eau selon la revendication 1, **caractérisé en ce que** l'émetteur de rayonnement UVC submersible (2) est disposé dans le sens longitudinal, au centre dans la chambre de réacteur (5).

3. Dispositif pour la désinfection de l'eau ou la décontamination de l'eau selon l'une quelconque des revendications 1 ou 2, **caractérisé en ce que** l'émetteur de rayonnement UVC submersible (2) est fixé sans vibrations au moyen de rainures à ressort dans la section transversale de la chambre de réacteur (5).

4. Dispositif pour la désinfection de l'eau ou la décontamination de l'eau selon l'une quelconque des revendications 1 à 3, **caractérisé en ce que** l'émetteur de rayonnement UVC submersible (2) est protégé au moyen d'une enveloppe en verre de quartz à fermeture étanche.

5. Dispositif pour la désinfection de l'eau ou la décontamination de l'eau selon l'une quelconque des revendications 1 à 4, **caractérisé en ce que** l'émetteur de rayonnement UVC submersible (2) et la pompe (8) sont reliés à une unité de commande (9) disposée à l'extérieur du récipient de réserve d'eau (3) par le biais d'une conduite de câble étanche à l'eau (10).

6. Dispositif pour la désinfection de l'eau ou la décontamination de l'eau selon l'une quelconque des revendications 1 à 5, **caractérisé en ce que** la chambre de réacteur (5) est de préférence de configuration carrée, dans lequel la surface de recouvrement (11) est pourvue d'au moins un couvercle amovible.

7. Dispositif pour la désinfection de l'eau ou la décontamination de l'eau selon l'une quelconque des revendications 1 à 6, **caractérisé en ce que** plusieurs réacteurs de décontamination (4) submersibles peuvent être combinés de manière modulable.

8. Dispositif pour la désinfection de l'eau ou la décontamination de l'eau selon la revendication 7, **caractérisé en ce que**, lors de l'immersion de plusieurs réacteurs de décontammation (4) dans un récipient de réserve d'eau (3), ceux-ci peuvent être mis en oeuvre ou introduits en étant répartis les uns au-dessus des autres, les uns à côté des autres ou également les uns derrière les autres dans le récipient de réserve d'eau (3), et peuvent être réglés conjointement au moyen d'une unité de commande (9).
